Europäisches Patentamt

European Patent Office

Office européen des brevets

(19)

(11) Numéro de publication: **0 238 390 B1**

(12) **FASCICULE DE BREVET EUROPEEN**

(45) Date de publication du fascicule du brevet:
**04.07.90**

(51) Int. Cl.⁵: **G21C 1/08**, G21C 13/02, G21C 7/10, G21C 17/10

(21) Numéro de dépôt: **87400502.8**

(22) Date de dépôt: **06.03.87**

(54) Equipements internes de réacteurs nucleaires à cuve allongée.

(30) Priorité: **07.03.86 FR 8603253**

(43) Date de publication de la demande:
**23.09.87 Bulletin 87/39**

(45) Mention de la délivrance du brevet:
**04.07.90 Bulletin 90/27**

(84) Etats contractants désignés:
**BE CH DE ES GB IT LI NL SE**

(56) Documents cités:
**EP-A- 0 125 326**
**FR-A- 2 382 747**
**GB-A- 2 015 778**

**EUR 4630I, vol. 1, 1971, Euratom Fiat S.p.A. - ANSALDO S.p.A.; "Nave cisterna a propulsione nucleare"**

(73) Titulaire: **FRAMATOME, Tour Fiat 1, Place de la Coupole, F-92400 Courbevoie(FR)**

(72) Inventeur: **Desfontaines, Guy, 18, rue Jean Jaurès, F-92800 Puteaux(FR)**
Inventeur: **Millot, Jean-Paul, 1, Allée des Roitelets, F-78340 Elancourt(FR)**

(74) Mandataire: **Fort, Jacques et al, CABINET PLASSERAUD 84, rue d'Amsterdam, F-75009 Paris(FR)**

## Description

La présente invention concerne les équipements internes de réacteurs nucléaires et trouve une application particulièrement importante dans le cas des réacteurs nucléaires à eau pressurisée dits REP.

Toutefois, l'invention est applicable à tout type de réacteur comprenant une cuve de résistance à la pression d'un réfrigérant fermée par un couvercle amovible, et comportant au moins une tubulure d'entrée et au moins une tubulure de sortie du réfrigérant situées à proximité du couvercle, un coeur constitué d'assemblages combustibles dans lesquels le réfrigérant circule du bas vers le haut, plusieurs grappes de contrôle actionnées par des tiges de commande au travers du couvercle du réacteur, lesdits équipements internes comprenant des équipements internes supérieurs interposés entre le coeur et le couvercle.

L'invention concerne également des équipements internes de réacteurs comportant des équipements internes inférieurs interposés entre le coeur et le fond de la cuve et un dispositif de guidage de sonde d'instrumentation du coeur pénétrant dans le coeur par la partie inférieure des assemblages.

On connaît déjà différents types d'équipements internes de réacteurs nucléaires.

Le document EP-A 125 326 concernant des équipements internes supérieurs de réacteurs à eau sous pression, montre une architecture où le réfrigérant rentre dans le réacteur par une ou plusieurs tubulures d'entrée, descend le long de la cuve pour rentrer par la partie basse du coeur du réacteur et ressortir réchauffé, dans un caisson de guidage des grappes de contrôle avant de rentrer dans une calandre de répartition du réfrigérant qui dévie le flux hydraulique vers les tubulures de sortie du réfrigérant. Le caisson de guidage comprend les tubes de guidage des grappes de contrôle et de leurs tiges de commandes. Ces guidages de grappes sont traversés par le flux hydraulique du réfrigérant sortant du coeur.

Cette solution présente divers inconvénients. Les guidages de grappes sont traversés par le flux hydraulique du réfrigérant sortant du coeur et sont donc soumis aux chocs et turbulences dudit réfrigérant. Ceci peut endommager les crayons des grappes de contrôle. Par ailleurs, en situation accidentelle de rupture de tuyauterie primaire sur une branche froide, le volume d'eau situé au-dessus du coeur, dans les équipements internes supérieurs, contribue mal au refroidissement du coeur, d'une part parce qu'il est à la température de sortie coeur et d'autre part parce qu'il est rapidement évacué par la brèche.

Quant aux équipements internes inférieurs, ils comprennent en partie basse, une structure composée de tubes guides des doigts de gant de sondes de mesure de flux, amenant ces dernières à l'intérieur des assemblages par le dessous du coeur.

Dans l'art antérieur, ces doigts de gant de sondes de mesure de flux pénètrent dans la cuve du réacteur par en dessous grâce à des pénétrations placées dans l'axe des tubes guides. Ces pénétrations constituent des points fragiles, qui en cas de ruptures successives sont susceptibles d'entraîner le dénoyage du coeur.

Une autre solution consiste à connecter l'instrumentation du coeur au travers du couvercle de la cuve. Ceci entraîne la nécessité de déconnecter ladite instrumentation chaque fois qu'il est nécessaire de retirer le couvercle de cuve.

Toutefois il pouvait sembler à l'homme de métier que des équipements internes tels que ceux ci-dessus définis étaient suffisants.

La présente invention vise à fournir des équipements internes de réacteur correspondant mieux à l'exigence de la pratique, notamment en ce qu'elle permet:

– une meilleure protection des moyens de guidage des grappes de contrôle et de leurs tiges de commandes, en évitant de les faire traverser par le débit du réfrigérant sortant du cœur;

– une meilleure sécurité en cas de rupture d'une branche froide de tuyauterie primaire, en créant une réserve d'eau importante constituée par le volume situé au-dessus du cœur et non traversé par le réfrigérant, volume dont on peut contrôler le temps de vidange et dont la température est voisine de celle du réfrigérant à l'entrée du cœur, rendant ainsi possible la suppression des accumulateurs de réfrigérant externe à la cuve en cas d'accident;

– une utilisation de la pression différentielle, due à la charge hydraulique et aux pertes de charge différentielle, de la partie haute de la cuve du réacteur qui constitue une aide à la chute des grappes et qui peut également être utilisée pour refroidir des grappes fertiles;

– une minimisation du nombre de pénétrations des arbres d'entraînement des mécanismes entraînant les tiges de commande des grappes sur le couvercle de cuve.

Dans ce but, l'invention propose des équipements internes selon la revendication 1.

De tels équipements internes décrits ci-dessus présentent des avantages qui revêtent une importance particulière dans les réacteurs à grand nombre de grappes tels que les réacteurs à variation de spectre dits RVS et/ou sous modérés dits RSM qui utilisent des grappes de commande et des grappes de variation du spectre d'énergie des neutrons.

L'invention propose également des équipements internes de réacteurs nucléaires comportant, de plus, un dispositif de guidage de sondes d'instrumentation du cœur pénétrant dans le cœur par la partie inférieure des assemblages et comprenant des tubes guides destinés chacun à livrer passage à au moins un doigt de gant de sonde de mesure de flux, caractérisés en ce que lesdits tubes guides pénètrent dans la cuve du réacteur par au moins un fourreau de traverse étanche de la cuve situé au-dessus des tubulures d'entrée et de sortie du réfrigérant, en ce qu'ils cheminent le long de l'enveloppe cylindrique de canalisation du réfrigérant vers le bas, enveloppe par laquelle ils sont portés pour descendre ensuite jusqu'au-dessous de la plaque inférieure du cœur, et en ce que les tubes guides se répartissent ensuite transversalement afin de distribuer les sondes vers les assemblages. Cette disposition permet une suppression des piquages en dessous des tubulures d'entrée ou de sortie, en l'occurence sur le fond de cuve, en plus des résultats déjà mentionnés.

Dans des modes de réalisation avantageux, on a recours en outre à l'une et/ou à l'autre des dispositions suivantes:

- lesdits équipements internes, comprenant une enveloppe externe cylindrique espacée de la surface intérieure de la cuve de façon à permettre au flux de réfrigérant entrant canalisé de circuler le long de la cuve pour pénétrer dans le coeur par la partie basse des assemblages, comprennent également des moyens pour relier l'arrivée du réfrigérant à des canaux ménagés dans l'ensemble de collection de façon à amener du réfrigérant froid à pression supérieure à celle du réfrigérant qui sort du coeur par l'intermédiaire des tubes de passage des tiges de commande dans ledit ensemble de collection;

Les moyens de guidage des grappes de contrôle ou "guides de grappes" sont des ensembles mécano-soudés constitués de plaquettes transversales perforées ou "cartes de guidage", reliées entre-elles par des fourreaux de guidage continus et par des profilés carrés s'étendant sur toute la hauteur du guide de grappe. Certaines cartes de guidage viennent en outre s'appuyer latéralement en butée radiale sur les tubes entretoises pour assurer une bonne rigidité transversale à l'ensemble du dispositif de passage.

- les appuis en butée radiale se font sur six tubes entretoises disposés aux six sommets d'un hexagone régulier dont le centre est l'axe du guide de grappe et de l'assemblage combustible dans lequel pénètre la grappe de contrôle.

- le dispositif de séparation des débits constitue la partie inférieure des équipements internes supérieurs suspendus dans la cuve par pincement du couvercle avec la cuve ;

- les guides de grappes pénètrent dans la plaque inférieure du dispositif de séparation des débits par des trous qui reçoivent par le dessous la pièce d'embout de l'assemblage combustible ;

- des moyens d'injection d'eau permettent d'amener directement de l'extérieur de la cuve du réacteur de l'eau de refroidissement dans le dispositif de séparation des débits ;

- les rayons de courbure des tubes guides pour doigts de gant de sondes de mesure de flux ont une valeur suffisante pour permettre le retrait et l'engagement de ces doigts de gant et de la sonde associée à partir de l'extérieur du réacteur ;

- les équipements internes comportent des équipements internes inférieurs comprenant une enceinte délimitée par la plaque support inférieure du coeur et par une paroi percée de trous de passage pour le réfrigérant séparant ladite plaque du fond de la cuve, ladite enceinte comprenant des tubes, reliant les trous de passage du réfrigérant percés dans la paroi et la plaque support, délimitant ainsi un volume d'enceinte tranquillisé dans lequel se répartissent les tubes de guidage des sondes d'instrumentation pénétrant dans le coeur par la partie inférieure des assemblages.

L'invention sera mieux comprise à la lecture de la description qui suit d'un mode particulier de réalisation, donné à titre d'exemple non limitatif. La description se réfère aux dessins qui l'accompagnent dans lesquels :

- la figure 1 est un plan d'ensemble vu en coupe d'un réacteur muni d'équipements internes selon l'invention;

- la figure 2 est un agrandissement de la partie centrale de la coupe montrant plus précisément les équipements internes supérieurs;

- la figure 3 est une vue en coupe montrant les pénétrations de cuve pour tubes guides d'instrumentation;

- la figure 4 est une vue en coupe selon IV-IV de la figure 1;

- la figure 5 est une demi-vue de dessus, en coupe, d'un guide de grappe entouré de tubes entretoises;

- la figure 6 représente un agrandissement partiel de la figure 2 en demi-coupe verticale montrant la partie basse d'un guide de grappe dans le dispositif de séparation des débits ;

- la figure 7 est une vue de dessus partielle suivant VII-VII de la figure 2;

- la figure 8 représente un agrandissement partiel de la figure 2 en demi-coupe verticale montrant la partie haute d'un guide de grappe dans le dispositif séparation des débits ;

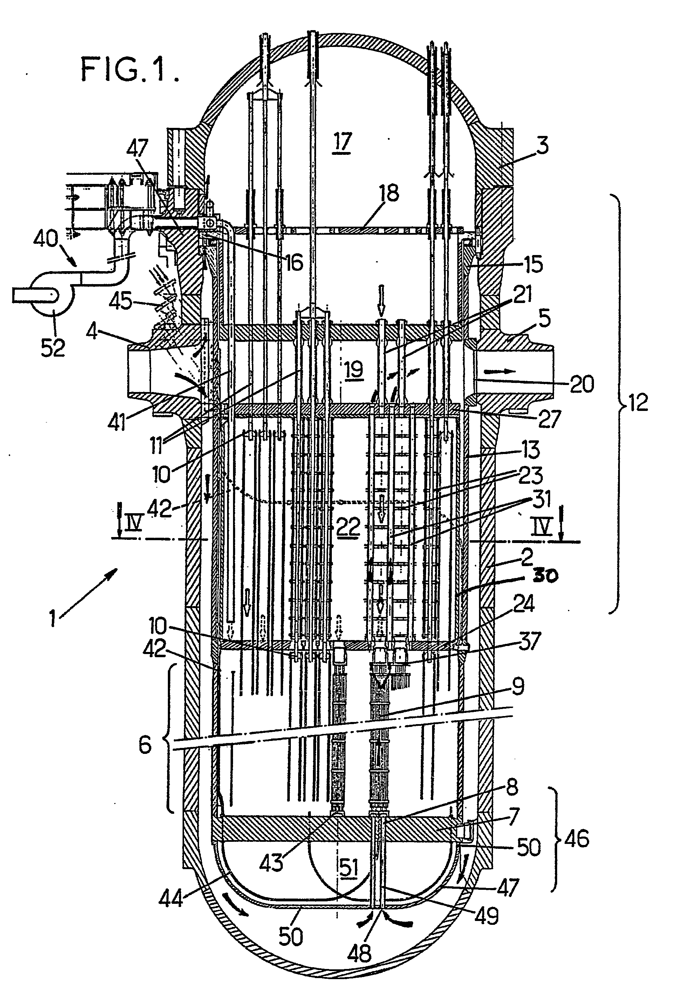

Sur la figure 1 on a représenté un réacteur à eau pressurisée 1 comprenant une cuve 2 de résistance à la pression d'un réfrigérant, fermée par un couvercle amovible 3 comportant notamment des tubulures d'entrée 4 et des tubulures de sortie 5 du réfrigérant, un coeur 6 muni d'une plaque support inférieure 7 percée de trous 8 pour permettre le passage du réfrigérant de bas en haut dans les assemblages combustibles 9 et des grappes de contrôle 10 actionnées par des tiges de commande 11 au travers du couvercle 3 du réacteur 1.

Le réacteur comporte également des équipements internes supérieurs 12 interposés entre le coeur 6 et le couvercle 3. Une enveloppe externe cylindrique 13, espacée de la surface intérieure 14 de la cuve 2 et munie d'une collerette supérieure 15 permettant de la suspendre par pincement entre le couvercle 3 et la cuve 2, permet de canaliser le flux du réfrigérant entrant par les tubulures 4 en les dirigeant le long de la surface intérieure 14 de la cuve 2 pour pénétrer dans le coeur 6 par la partie basse des assemblages 9.

Des moyens de passage 16 au niveau de la collerette 15 sont ménagés pour dériver un faible débit de flux réfrigérant entre l'arrivée par l'entrée 4 et le volume 17 délimité, d'une part, par le couvercle 3 du réacteur 1 et, d'autre part, par la partie haute 18 des équipements internes supérieurs 12 du réacteur.

Un ensemble de collection 19 du flux du réfrigérant permet de conduire transversalement ce dernier sortant du coeur vers les circuits de récupération des calories extérieurs au réacteur (ne figurant pas dans les dessins) par les tubulures de sortie 5, après avoir traversé l'enveloppe cylindrique 13 par des trous 20 disposés au droit desdites tubulures de sortie 5.

Des tubes de guidage 21 permettent le passage des tiges de commande 11 des grappes 10 au travers de cet ensemble 19, et ce à l'abri des turbulences du flux réfrigérant.

Les équipements internes supérieurs 12 comprennent encore un dispositif de séparation des débits 22 muni de guides 23 des grappes 10 et des tiges de commande 11. Il est disposé entre le coeur 6 et l'ensemble de collection 19.

Ledit dispositif 22 comprend par ailleurs une plaque inférieure 24 percée de trous 25 permettant le passage du flux réfrigérant sortant du coeur 6 dans le dispositif 22 et percée de trous 26 permettant le passage des grappes de contrôle 10 et de leurs tiges de commande 11. Il est également muni d'une plaque supérieure 27 percée de trous 28 permettant le passage du réfrigérant vers l'ensemble de collection 19 et de trous 29, placés au droit des tubes de guidage 21 des tiges de commande 11 des grappes de contrôle de l'ensemble de collection 19 et permettant leur passage.

Les deux plaques de ce dispositif sont reliées en périphérie par une virole 30 constituant l'ensemble du dispositif 22 en caisson. Un jeu minimum entre le caisson 22 et l'enveloppe externe cylindrique 13 est ménagé.

Des tubes entretoises 31 relient les trous de passage du réfrigérant dans lesdites plaques et sont placés entre les guides de grappes 23. Selon une disposition avantageuse de l'invention, mais non indispensable, ceux-ci sont des ensembles mécano-soudés ouverts, constitués par plaquettes perforées ou "cartes" 32 étagées et entretoisées, par des fourreaux de guidage 33 continus et par des profilés carrés 34 s'étendant sur toute la hauteur du guide de grappe.

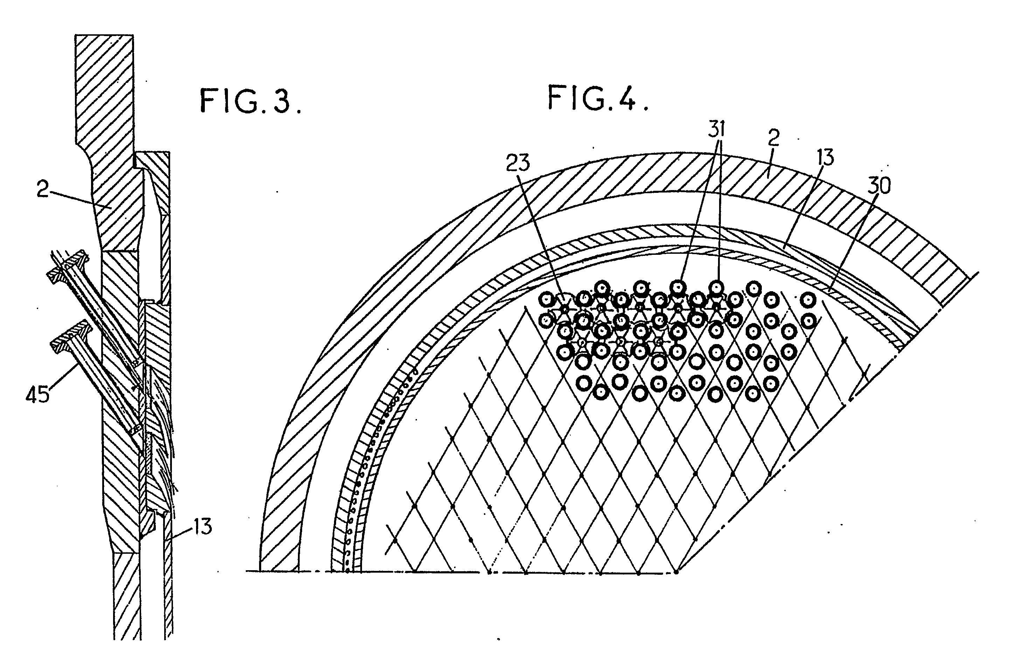

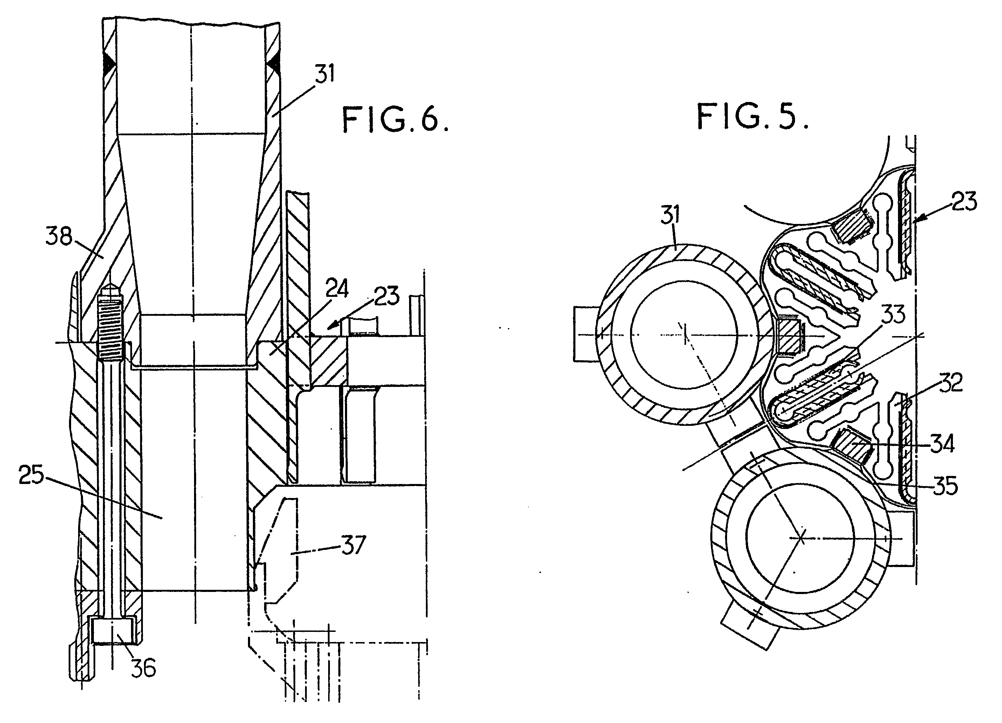

Les figures 4 et 5 montrent dans ce cas la distribution à pas triangulaire retenue. Les tubes entretoises sont disposés symétriquement aux six sommets d'un hexagone dont le centre est l'axe d'un guide de grappe 23.

La figure 5 représente plus particulièrement en demi coupe une "carte" 32 et trois de ses six tubes associés 31. Le guide de grappe 23 est en butée radiale sur chacun des six tubes l'entourant par des bossages 35, répartis sur la hauteur des tubes; il est fixé de façon connue à la plaque supérieure 27 du dispositif 22.

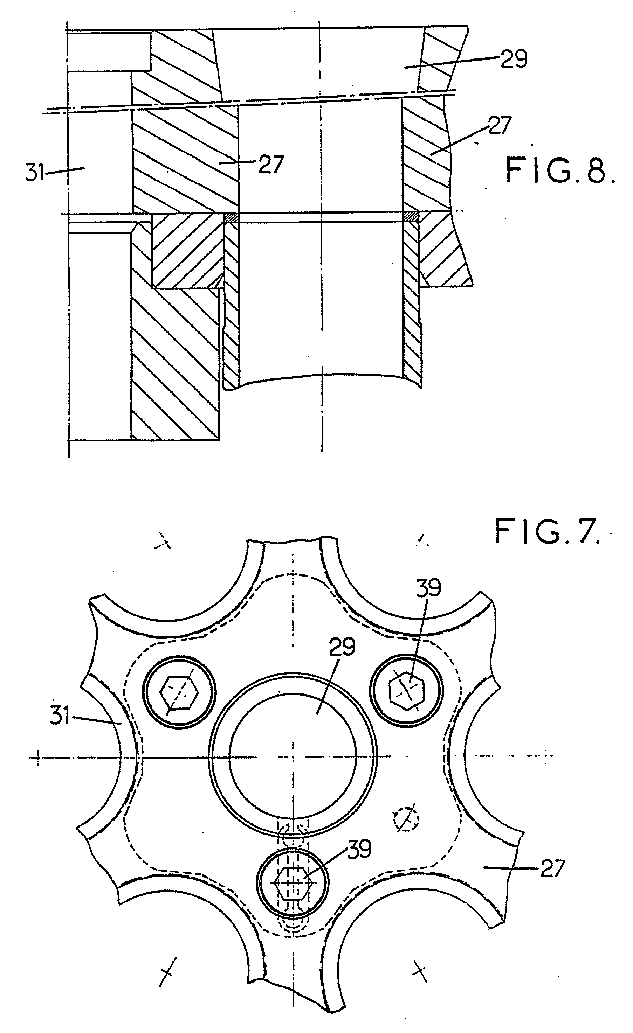

La figure 7 montre une vue de dessus partielle de la plaque supérieure 27.

Le guide de grappe 23, caché par la plaque, est schématiquement représenté par son contour en pointillé. Dans le mode de réalisation montré par cette figure, il est entre autre fixé rigidement par l'intermédiaire de trois vis 39 à la plaque 27; le trou 29 permet le passage de la tige de commande 11 de la grappe de contrôle guidée par le guide de grappe 23.

Dans le mode de réalisation montré à titre d'exemple nullement limitatif par la figure 6, ce dernier est centré de façon élastique et peut s'autodilater dans la plaque inférieure 24 en coulissant à frottement doux dans les trous 26 qui reçoivent par en dessous les pièces d'embout supérieur 37 des assemblages combustibles 9.

Les tubes entretoises 31 y sont par ailleurs fixés rigidement par des vis 36 dans la plaque inférieure 24. Des renforts 38 sont enfin ménagés en partie basse des tubes entretoises 31 véhiculant le réfrigérant.

Selon une disposition avantageuse de l'invention, le dispositif de séparation des débits 22 du flux du réfrigérant constitue la partie inférieure des équipements internes supérieurs 12 suspendus par pincement de la collerette 15.

Selon une autre disposition de l'invention, des moyens d'injection d'eau 40 permettent d'amener par des conduits 41 internes au réacteur de l'eau de refroidissement extérieure directement dans le dispositif de séparation des débits.

Selon l'invention, les équipements internes du réacteur 1 comportent par ailleurs un dispositif de guidage 42 de sondes d'instrumentation du coeur pénétrant dans le coeur par la partie inférieure 43 des assemblages combustibles 9. Ce dispositif comprend des tubes guides 44 destinés chacun à livrer passage à au moins un doigt de gant de sonde de mesure de flux.

Ces tubes guides 44 pénètrent dans la cuve 2 du réacteur 1 par des fourreaux 45 de traverse étanche figurant en pointillé sur la figure 1 et dont on a une vue agrandie sur la figure 3.

Ces fourreaux 45 se trouvent situés au-dessus des tubulures d'entrée 4 et de sortie 5 du réfrigérant.

Les tubes 44 cheminent ensuite jusqu'au dessous de la plaque inférieure du coeur 7 le long de l'enveloppe externe 13 qui les supporte, le jeu existant entre le dispositif 22 et ladite enveloppe permettant leur passage. L'étanchéité de la plaque 24 par rapport à l'enveloppe 13 étant soignée pour éviter au flux du réfrigérant sortant des assemblages d'emprunter le chemin entre virole 30 et enveloppe 13, le volume qui y est délimité se trouve relativement tranquillisé. La répartition transversale des tubes guides 44 peut alors se faire à l'abri des turbulences. Une nouvelle répartition transversale s'effectue ensuite afin de distribuer les sondes vers les assemblages 9.

Afin de permettre le retrait et l'engagement d'un doigt de sonde de mesure de flux à partir de l'extérieur du réacteur, des rayons de courbure suffisants sont ménagés pour les tubes guides 44.

Dans un mode avantageux de réalisation de l'invention, la partie basse des équipements internes inférieurs 46 comporte une enceinte délimitée par la plaque support inférieure 7 du coeur et par une paroi 47 percée de trous de passage 48 pour le réfrigérant. Des conduits 49 relient les trous de passage 48 dans la paroi 47 aux trous 8 dans la plaque inférieure 7 et canalisent tout le réfrigérant rentrant dans le coeur.

Un volume d'enceinte 51 à l'abri des perturbations est ainsi délimité, dans lequel les tubes guides 44 peuvent se répartir librement avant de pénétrer dans les assemblages, leur cheminement ayant été protégé de façon optimale. L'enceinte se remplit par des trous 50 ménagés à cet effet dans la paroi 47 et se purge de son air lors du remplissage initial par des moyens prévus dans la plaque support 7 du coeur.

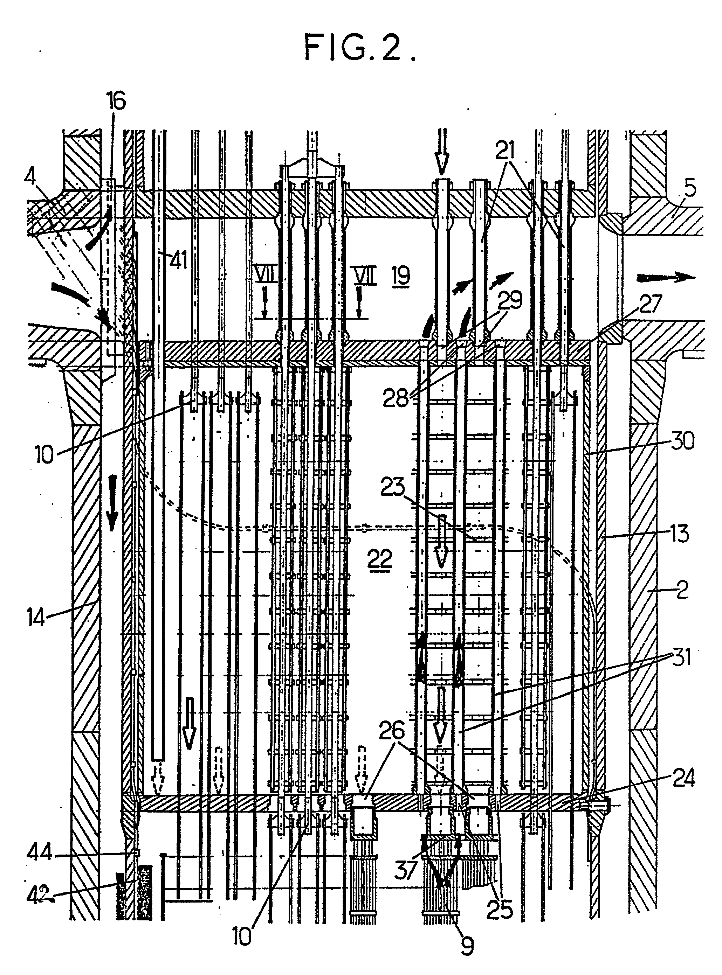

Le fonctionnement normal du réacteur nucléaire comprenant des équipements internes tels que décrits dans l'invention est explicité ci-après. Des flèches noires indiquent plus précisément sur les figures 1 et 2 les trajets suivis par le flux principal de réfrigérant.

Le réfrigérant froid entre dans le réacteur 1 par les tubulures d'entrée 4. Il est dévié par l'enveloppe extérieure 13, dans sa grande majorité, vers le bas du réacteur, où il pénètre dans les conduits 49 qu'il traverse avant de circuler de bas en haut, au travers des assemblages 9 du coeur 6 du réacteur. Le flux sortant d'un assemblage est dévié par la pièce supérieure d'embout 37 de l'assemblage pour être dirigé vers les trous 25 d'entrée des tubes entretoises 31 du dispositif 22.

Le flux réchaauffé par le coeur traverse alors le dispositif 22 par lesdits tubes 31 et ressort dans l'ensemble de collection 19 où il est dévié au travers des tubes guides 21 des tiges de commande 11. Il sort du réacteur par les tubulures de sortie 5 après avoir traversé l'enveloppe cylindrique 13 par des trous 20 disposés au droit desdites tubulures de sortie.

Le flux réfrigérant sortant des assemblages est donc isolé sur tout son parcours des volumes de réfrigérant environnant les grappes de contrôle et leurs tiges de commande dans le dispositif 22 et dans les tubes guides 21.

Ces volumes sont reliés directement à la capacité 17 située sous le couvercle du réacteur et qui est en surpression par rapport au réfrigérant sortant des assemblages.

Un courant axial descendant, représenté par des flèches blanches sur les figures 1 et 2 est donc présent dans les tubes 21 et le dispositif 22. Il constitue une aide à la chute des grappes, ce qui va dans le sens de la sûreté nucléaire et peut également assurer le refroidissement des grappes si certaines d'entre-elles sont des gappes fertiles, comme c'est le cas pour un réacteur à variation de spectre.

Pour alimenter ce flux descendant, des moyens de passage 16 au niveau de la collerette 15 de l'enveloppe cylindrique 13 permettent à un faible débit de réfrigérant froid d'accéder à la capacité 17 située sous le couvercle du réacteur.

En fonctionnement normal et à l'occasion d'un arrêt pour rechargement du réacteur, la disposition du dispositif de guidage des sondes d'instrumentation va permettre le démontage des équipements internes supérieurs sans démontage dudit dispositif de guidage.

En effet les tubes guides 44 pénétrant dans la cuve et non au travers du couvercle par des fourreaux 45, puis étant supportés par la seule enveloppe externe 13, sont indépendants desdits équipements internes supérieurs.

Dans certains cas de fonctionnements accidentels, le réacteur nucléaire comprenant des équipements internes tels que décrit dans l'invention va également se montrer particulièrement intéressant.

Le fonctionnement envisagé est celui correspondant à une perte du réfrigérant sur une branche froide du circuit primaire.

C'est le cas le plus pénalisant pour ce qui est d'assurer un refroidissement suffisant des assemblages combustibles pendant et après l'accident.

Les équipements internes tels que conçus par l'invention permettent d'assurer ce refroidissement grâce au débit décrit ci-dessus et représenté par des flèches blanches sur les figures 1 et 2.

Ce débit va remplir le coeur par le haut à partir du volume de réfrigérant relativement froid présent dans le dispositif de séparation des débits et du volume mort 17 sous le couvercle 3 via les tubes guides 21 des tiges de commande de manutention 11.

La charge gravitaire et la surpression qui règne en début d'accident dans le dispositif 22 et le volume 17 permet le transfert du réfrigérant au coeur par les guides de grappes 23 dans la plaque inférieure du dispositif 24, ainsi que par les conduits de maintien 33 des crayons de grappes.

Immédiatement après l'accident, le volume de fluide, à la température d'entrée cuve, qui est disponible dans le dispositif 22 et dans la capacité 17, assure le refroidissement du coeur pendant un temps de l'ordre de 30s, suffisant pour permettre aux pompes d'injection de sécurité moyenne pression 52, dites ISMP, connues de l'art antérieur et faisant partie des moyens d'injection 40, de démarrer et d'atteindre leur débit nominal.

Dans un mode avantageux de réalisation, mais nullement limitatif, l'arrivée des pompes ISMP 52, s'effectue en partie inférieure du dispositif 22, par exemple par deux piquages 53, percés dans la bride de cuve, puis six conduits 41 répartis à partir de ces piquages.

Le fait d'arriver en partie basse du dispositif 22 permet en effet de limiter les échanges thermiques entre le fluide froid débité par les pompes ISMP et le fluide à la température d'entrée cuve où la vapeur contenue dans le dispositif 22 et la capacité 17, évitant ainsi d'y faire chuter la pression, ce qui aurait pour effet de ralentir, voire même d'empêcher, l'écoulement du fluide de l'injection de sécurité vers le coeur.

Le débit des pompes ISMP et la section de passage à travers la plaque 24 et les tubes guides des assemblages combustibles 9, pour le fluide débité par ces pompes, sont déterminées de façon qu'un certain niveau de fluide se maintienne dans le dispositif 22, afin que le fluide débité par les pompes ISMP s'écoule de manière la mieux répartie possible sur les assemblages du coeur.

Il est ainsi possible de maintenir la température des crayons des assemblages combustibles à un niveau acceptable, jusqu'à ce que l'on effectue le renoyage du coeur en fin d'accident, par des moyens connus en eux-mêmes, comme à l'aide des pompes d'injection de sécurité basse pression (ISBP). L'efficacité du dispositif est telle que l'on n'a plus beson d'accumulateurs externes pour réduire le temps de renoyage et que l'on peut même allèger le dimensionnement des pompes ISBP.

**Revendications**

1. Equipements internes de réacteur nucléaire comprenant une cuve (2) de résistance à la pression d'un réfrigérant, fermée par un couvercle amovible (3) et comportant au moins une tubulure d'entrée (4) et au moins une tubulure de sortie (5) du réfrigérant situées à proximité du couvercle (3), un cœur (6) constitué d'assemblages combustibles (9) et dans lesquels le réfrigérant circule du bas vers le haut, plusieurs grappes de contrôle (10) actionnées par des tiges de commande (11) au travers du couvercle du réacteur (3), lesdits équipements internes comportant des équipements internes supérieurs (12) interposés entre le cœur (6) et le couvercle (3) et comprenant
un ensemble de collection (19) du réfrigérant sortant du cœur (6) vers la tubulure de sortie (5), ledit ensemble comprenant des tubes de guidage (21) des tiges de commande (11) des grappes de contrôle (10), un dispositif de séparation des débits d'écoulement du réfrigérant (22), comprenant des guides (23) des grappes de contrôle (10) et de leurs tiges de commande (11) dans leurs déplacements verticaux, interposé entre ledit ensemble de collection (19) et le cœur (6) et comprenant une plaque inférieure (24) percée de passages (25) pour le réfrigérant sortant du cœur (6), une plaque supérieure (27) percée de trous (28) permettant le passage du réfrigérant vers l'ensemble de collection (19), et une virole (30) reliant lesdites plaques du dispositif de séparation de débit (22) à leur périphérie, caractérisés en ce que ledit dispositif de séparation de débits (22) comprend des tubes entretoises (31) reliant les passages (25, 28) du réfrigérant dans lesdites plaques et placés entre les guides.

2. Equipements internes de réacteur nucléaire selon la revendication 1, comprenant une enveloppe externe cylindrique (13) espacée de la surface intérieure (14) de la cuve (2) de façon à permettre au flux de réfrigérant entrant par la tubulure d'entrée (4) de circuler entre la cuve (2) et l'enveloppe (13) pour pénétrer dans le cœur (6) par la partie basse des assemblages, caractérisés en ce que lesdits équipements internes comprennent des moyens de passage (16) pour amener du réfrigérant froid, à pression supérieure à celle du réfrigérant qui sort du cœur, au-dessus des tubes de guidage (21) des tiges de commande (11) de façon à alimenter le dispositif de répartition des débits (22).

3. Equipements internes de réacteur nucléaire selon la revendication 2, caractérisés en ce que les guides de grappes (23) dans le dispositif de séparation des débits (22) comprennent des plaquettes transversales perforées (32) de guidage réparties sur plusieurs niveaux par grappe de contrôle (10), certaines plaquettes (32) étant maintenues en butée radiale sur les tubes entretoises (31).

4. Equipements internes de réacteur nucléaire selon la revendication 3, caractérisés en ce que les appuis en butée radiale se font sur six desdits tubes entretoises (31) disposés aux six sommets d'un hexagone dont le centre est l'axe du guide (23) de la grappe de contrôle (10).

5. Equipements internes de réacteur nucléaire selon la revendication 2, 3 ou 4, caractérisés en ce que le dispositif (22) de séparation des débits constitue la partie inférieure des équipements internes supérieurs (12) et en ce que lesdits équipements internes sont suspendus dans la cuve par pincement entre le couvercle (3) et la cuve (2).

6. Equipements internes de réacteur nucléaire selon l'une quelconque des revendications 1 à 5, dont les assemblages (9) sont munis d'un embout (37) supérieur, caractérisés en ce que les guides (23) des grappes (10) pénètrent dans la plaque inférieure (24) du dispositif de séparation des débits (22) par des trous qui reçoivent par le dessous ledit embout (37).

7. Equipements internes de réacteur nucléaire selon la revendication 2, caractérisés en ce qu'ils comportent des moyens d'injection d'eau (40) permettant d'amener directement de l'extérieur de la cuve (2) du réacteur de l'eau de refroidissement à la partie inférieure du dispositif de séparation des débits (22).

8. Equipements internes de réacteur nucléaire selon l'une quelconque des revendications précédentes, caractérisés en ce que le cœur (6) est porté par une plaque support inférieure (7) qui est percée de trous de passage (8) pour le réfrigérant circulant du bas vers le haut dans les assemblages (9) et est supportée par l'enveloppe externe cylindrique (13) espacée de la surface intérieure (14) de la cuve (2) pour délimiter un canal annulaire de descente du réfrigérant et en ce que lesdits équipements comprennent un dispositif de guidage (42) de doigts de gant de sondes d'instrumentation du cœur pénétrant dans le cœur (6) par la partie inférieure (43) des assemblages (9), ledit dispositif comprenant des tubes guides (44), destinés chacun à livrer passage à au moins un doigt de gant, qui pénètrent dans la cuve du réacteur par au moins un fourreau (45) de traversée étanche de la cuve (2) situé au-dessus des tubulures d'entrée (4) et de sortie (5) du réfrigérant, qui cheminent le long de l'enveloppe cylindrique (13) par laquelle ils sont portés pour descendre ensuite jusqu'au dessous de la plaque inférieure (7) du cœur, et qui se répartissent transversalement afin de distribuer les sondes vers les assemblages.

9. Equipements internes de réacteur nucléaire selon la revendication 8, caractérisés en ce que les rayons de courbure des tubes guides (44) ont une valeur suffisante pour permettre le retrait et l'engagement d'un doigt de gant de sonde à partir de l'extérieur du réacteur.

10. Equipements internes de réacteur nucléaire selon la revendication 8 ou 9, comprenant des équipements internes inférieurs (46) interposés entre le cœur (6) et le fond de la cuve, caractérisés en ce que lesdits équipements internes inférieurs comportent une enceinte délimitée par la plaque support inférieure (7) du cœur (6) et par une paroi (47) percée de trous (48) de passage pour le réfrigérant séparant ladite plaque du fond de la cuve, ladite enceinte comprenant des conduits (49) reliant les trous de passage du réfrigérant de la paroi (47) et de ladite plaque support (7), délimitant ainsi un volume d'enceinte tranquillisé (51) dans lequel se répartissent les tubes guides (44) des doigts de gant de sondes d'instrumentation.

## Claims

1. Internal equipment for nuclear reactor comprising a coolant pressure resistant vessel (2), closed by a removable cover (3) and having at least one inlet pipe (4) and at least one outlet pipe (5) for the coolant, situated in the vicinity of the cover (3), a core (6) formed of fuel assemblies (9) and in which the coolant flows from bottom to top, several control clusters (10) actuated by drive rods (11) through the cover of the reactor (3), said internal equipment having upper internal equipment (12) between the core (6) and the cover (3) and including an assembly (19) for collecting the coolant leaving the core (6) towards the outlet pipe (5), said assembly including guide tubes (21) for the drive rods (11) of the control clusters (10), a device for separating the flow of the coolant (22) including guides (23) for guiding the control clusters (10) and their drive rods (11) during their vertical movement, located between said collection assembly (19) and the core (6) and including a lower plate (24) formed with passages (25) for the coolant leaving the core (6), an upper plate (27) formed with holes (28) for allowing the coolant to pass to the collection assembly (19), and a skirt (30) connecting said plates of the flow separation device (22) at the peripheries thereof, characterized in that said flow separation device (22) includes spacer tubes (31) connecting together the coolant passage (25; 28) in said plates and placed between the guides.

2. Internal equipment for nuclear reactor according to claim 1, comprising a cylindrical external casing (13) spaced from the inner surface (14) of the vessel (2) so as to allow the coolant flow entering through the inlet pipe (4) to flow between the vessel (2) and the casing (13) so as to penetrate into the core (16) through the lower parts of the assemblies, characterized in that said internal equipment includes passage means (16) for bringing cold coolant, at a pressure higher than that of the coolant which leaves the core, above the guide tubes (21) of the drive rods (11) so as to supply the flow distribution device (22).

3. Internal equipment for nuclear reactor according to claim 2, characterized in that the cluster guides (23) in the flow separation device (22) include perforated transverse guiding plates (32) distributed at several levels per control cluster (10), some plates (32) being held in radial abutment against the spacer tubes (31).

4. Internal equipment for nuclear reactor according to claim 3, characterized in that the radial abutments are provided on six of said spacer tubes (31) disposed at the six apices of a hexagon whose center is the axis of the guide (23) of the control cluster (10).

5. Internal equipment for nuclear reactor according to claim 2, 3 or 4, characterized in that the flow separation device (22) forms the lower part of the upper internal equipment (12) and in that said internal equipment is suspended in the vessel by clamping between the cover (3) and the vessel (2).

6. Internal equipment for nuclear reactor according to any one of claims 1 to 5, whose assemblies (9) are provided with an upper end piece (37), characterized in that the guides (23) of the clusters (10) penetrate into the lower plate (24) of the flow separation device (22) through holes which receive said end piece (37) from underneath.

7. Internal equipment for nuclear reactor according to claim 2, characterized in that it includes water injection means (40) for bringing cooling water directly from outside the vessel (2) of the reactor to the lower part of the flow separation device (22).

8. Internal equipment for nuclear reactor according to any one of the preceding claims, characterized in that the core (6) is carried by a lower support plate (7) which is formed with passage holes (8) for the coolant flowing upwardly in the assemblies (9) and which is supported by the cylindrical external casing (13) spaced from the inner surface (14) of the vessel (2) for defining an annular channel for downward coolant flow and in that said equipment has a guiding device (42) for guiding instrumentation probe glove fingers of the core penetrating into the core (6) through the lower part (43) of the assemblies (9), said device including guide tubes (44), each intended to accomodate at least one glove finger, which penetrate into the vessel of the reactor through at least one sealed through-sleeve (4) of the vessel (2) situated above the coolant inlet (4) and outlet (5) pipes, which extend along the cylindrical casing (13) which support them and then extend downwards below the lower plate (7) of the core, and which are distributed transversely so as to distribute the probes towards the assemblies.

9. Internal equipment for nuclear reactor according to claim 8, characterized in that the radii of curvature of the guide tubes (44) have a sufficient value for allowing a probe glove finger to be withdrawn and engaged from the outside of the reactor.

10. Internal equipment for nuclear reactor according to claim 8 or 9, including lower internal equipment (46) located between the core (6) and the bottom of the vessel, characterized in that said lower internal equipment has an enclosure defined by the lower support plate (7) of the core (6) and by a wall (47) with coolant passage holes (48) formed therein, separating said plate from the bottom of the vessel, said enclosure including ducts (49) connecting the coolant passage holes in the wall (47) and those in said support plate (7), thus defining a tranquilized enclosure (51) in which the guide tubes (44) of the instrumentation probe glove fingers are distributed.

## Patentansprüche

1. Innere Struktur eines Kernreaktors mit einem Druckbehälter (2), der unter dem Druck eines Kühlmittels steht, und durch einen abnehmbaren Deckel (3) verschlossen ist, mit mindestens einer Eingangsrohranordnung (4) und mindestens einer Ausgangsrohranordnung (5) für das Kühlmittel, die in der Nähe des Deckels (3) angeordnet sind, ferner mit einem Reaktorkern (6) mit Brennelementkassetten (9), in denen das Kühlmittel von unten nach oben strömt, mit mehreren Kontrollstabbündeln (10), die durch Steuerstäbe (11) durch den Deckel des Reaktors (3) betätigt werden, wobei die innere Struktur eine obere innere Struktur (12) aufweist, die zwischen dem Kern (6) und dem Deckel (3) angeordnet ist und eine Kühlmittelsammelanordnung (19) aufweist, für das aus dem Reaktorkern (6) zur Ausgangsrohranordnung (5) hin austretende Kühlmittel, mit Führungsrohren (21) für die Steuerstäbe (11) und die Kontrollstabbündel (10), einer Vorrichtung zur Trennung der Kühlmittelflußdurchsätze (22) mit Führungen (23) für die Kontrollstabbündel (10) und deren Steuerstäbe (11) zur Führung ihrer Vertikalbewegungen, angeordnet zwischen der Sammelanordnung (19) und dem Reaktorkern (6) mit einer unteren Platte (24), die mit Durchgangsöffnungen (25) für das aus dem Reaktorkern (6) austretende Kühlmittel versehen ist, mit einer oberen Platte (27) mit Durchgangsöffnungen (28), die den Durchgang von Kühlmittel zur Sammelanordnung (19) gewährleisten und einem Mantel (30), der die Platten der Durchsatztrennvorrichtung (22) an deren Rändern miteinander verbindet, dadurch gekennzeichnet, daß die Durchsatztrennvorrichtung (22) Zwischenrohre (31) aufweist, die die Durchgangsöffnungen (25, 28) für das Kühlmittel in den Platten verbinden und die zwischen den Führungen angeordnet sind.

2. Innere Struktur eines Kernreaktors nach Anspruch 1 mit einer äußeren Zylinderhülle (13), die von der inneren Oberfläche (14) des Behälters (2) derart beabstandet ist, daß der durch die Eingangsrohranordnung (4) eintretende Kühlmittelfluß zwischen dem Behälter (2) und der Hülle (13) zirkulieren kann, um in den Reaktorkern (6) durch den unteren Teil der Brennelementkassetten einzudringen, dadurch gekennzeichnet, daß die innere Struktur Durchgangsorgane (16) aufweist, um das kalte Kühlmittel mit einem Druck größer als der des aus dem Reaktorkern austretenden Kühlmittels nach oberhalb der Führungsrohre (21) der Steuerstäbe (11) zu führen, so daß die Flußverteilungsvorrichtung (22) gespeist wird.

3. Innere Struktur eines Reaktorkerns nach Anspruch 2, dadurch gekennzeichnet, daß die Führungen der Bündel (23) in der Vorrichtung zur Trennung der Durchsätze (22) perforierte transversale Führungsplatten (32) aufweist, die auf mehreren Ebenen pro Kontrollstabbündel (10) verteilt sind und mehrere Platten (32) durch radialen Anschlag gegen die Zwischenrohre (31) gehalten werden.

4. Innere Struktur eines Kernreaktors nach Anspruch 3, dadurch gekennzeichnet, daß die Auflageflächen der radialen Anschläge auf sechs der Zwischenrohre (31) liegen, die an den sechs Spitzen eines Sechsecks liegen, in dessen Mitte die Achse der Führung (23) der Steuerstabbündel (10) angeordnet ist.

5. Innere Struktur eines Kernreaktors nach den Ansprüchen 2, 3 oder 4, dadurch gekennzeichnet, daß die Vorrichtung (22) zur Trennung der Durchsätze den unteren Teil der oberen inneren Struktur (12) bildet und dadurch, daß die innere Struktur in dem Behälter durch Klemmung zwischen dem Deckel (3) und dem Behälter (2) gehaltert ist.

6. Innere Struktur eines Kernreaktors nach einem der Ansprüche 1 bis 5, dessen Brennelementkassetten (9) mit einem oberen Ansatz (37) versehen sind, dadurch gekennzeichnet, daß die Führungen (23) der Steuerstabbündel (10), in die untere Platte (24) der Vorrichtung zur Trennung der Durchsätze (22) durch Öffnungen eindringen, die von unten den Ansatz (37) aufnehmen.

7. Innere Struktur eines Kernreaktors nach Anspruch 2, gekennzeichnet durch eine Wassereinspritzvorrichtung (40) zum unmittelbaren Einbringen von Kühlwasser von außerhalb des Behälters (2) in den unteren Bereich der Vorrichtung zur Trennung der Durchsätze (22).

8. Innere Struktur eines Kernreaktors nach einem der vorstehenden Ansprüche, dadurch gekennzeichnet, daß der Kern (6) von einer unteren Trägerplatte (7) getragen wird, die von Durchgangsöffnungen (8) für das Kühlmittel durchstoßen ist, das von unten nach oben in die Brennelementkassetten (9) strömt, wobei die Platte von dem äußeren zylinderförmigen Mantel (13) getragen wird, der von der inneren Oberfläche (14) des Behälters (2) getrennt ist, um einen Ringkanal für sinkendes Kühlmittel einzugrenzen und dadurch, daß die innere Struktur eine Führungsvorrichtung (42) für die Gerätesondenhüllen des Reaktorkerns, die in den Kern (6) ausgehend von dem unteren Teil (43) der Brennelementkassette (9) eindringen, aufweist, wobei die Vorrichtung Führungsrohre (44) aufweist, die jeweils dazu bestimmt sind, eine Passage für mindestens eine Hülle zu bilden, die in den Reaktorbehälter über mindestens eine Leithülse (45), die den Behälter (2) dicht durchquert und oberhalb der Eingangsrohranordnung (4) und der Ausgangsrohranordnung (5) des Kühlmittels angeordnet ist, wobei die Rohre entlang des Zylindermantels (13) geführt sind, von dem sie getragen werden, um anschließend bis unterhalb der unteren Platte (7) des Kerns zu sinken, und die transversal angeordnet sind, um die Sonden auf die Brennelementkassetten zu verteilen.

9. Innere Struktur eines Kernreaktors nach Anspruch 8, dadurch gekennzeichnet, daß die Krümmungsradien der Führungsrohre (44) einen ausreichenden Wert haben, um das Rückholen und das Einführen einer Hülle einer Sonde vom Äußeren des Reaktors zu ermöglichen.

10. Innere Struktur eines Kernreaktors nach Anspruch 8 oder 9 mit einer unteren inneren Struktur (46), die zwischen dem Reaktorkern (6) und dem Boden des Behälters angeordnet ist,
dadurch gekennzeichnet, daß
die untere innere Struktur einen Behälter aufweist, der von der unteren Trägerplatte (7) des Kerns (6) und einer Wandung (4) eingegrenzt wird, die mit Durchgangsöffnungen (48) für das Kühlmittel versehen ist, das die Platte von dem Boden des Behälters trennt, wobei der Behälter Rohrleitungen (49) aufweist, die die Durchgangsöffnungen für das Kühlmittel der Wandung (47) und die Trägerplatte (7) verbinden, wodurch somit ein beruhigtes Behältervolumen (51) umgrenzt wird, in dem sich die Führungsrohre (44) der Hüllen der Gerätesonden verteilen.

# FIG.1.

# FIG.2.

FIG.3.

FIG.4.

EP 0 238 390 B1

FIG.5.

FIG.6.

29

27

31

27

FIG.8.

FIG.7.

39

29

31

39

27